# EUROPÄISCHE PATENTSCHRIFT

(11) **EP 1 022 496 B1**
(45) Veröffentlichungstag und Bekanntmachung des Hinweises auf die Patenterteilung: **14.04.2004**
(21) Anmeldenummer: 99125159.6
(22) Anmeldetag: 17.12.1999
(51) Int. Cl.: F16J 3/04, F16D 3/84

(54) **Manschette zum Abdichten einer Gelenkverbindung**
Sealing sleeve for hinge connection
Manchon d'étanchéité pour liaison articulée

(30) Priorität: 19.01.1999 DE 29900828 U
(43) Veröffentlichungstag der Anmeldung: 26.07.2000
(73) Patentinhaber: Didszuhn, Wolfgang, 85077 Manching-Pichl (DE)
(72) Erfinder: Didszuhn, Wolfgang, 85077 Manching-Pichl (DE)
(74) Vertreter: Sasse, Volker, Dipl.-Ing.

(56) Entgegenhaltungen:
- EP-A- 0 794 347
- DE-U- 7 508 681
- DE-U- 29 900 828
- FR-A- 2 591 301
- FR-A- 2 717 542
- US-A- 3 623 340

## Beschreibung

Die Erfindung betrifft eine Manschette zum Abdichten einer Gelenkverbindung gemäß dem Oberbegriff des Patentanspruchs 1.

Aus der DE 38 13 782 A1 ist eine Schutzmanschette für eine Gelenkverbindung bekannt, die einen Faltenbalg und daran anschließend stufenförmig nach außen erweiternde Ringflansche aufweist. Diese stufenförmig ausgebildeten Ringflansche dienen dazu, um diese Manschette an Befestigungs-Flanschen mit unterschiedlichen Durchmessern nutzen zu können. Der überstehende und zu große, stufenförmige Ringflanschteil wird von der Manschette abgeschnitten.. Am äußeren Ende jedes Ringflansches ist ein T-förmiger Flansch angeformt, der außenseitig eine Spannbandnut begrenzt und innenseitig am Befestigungsflansch anliegt.

Der Erfindung liegt die Aufgabe zugrunde, eine Manschette der eingangs genannten Art zu schaffen, die eine verbesserte Dichtwirkung aufweist..

Diese Aufgabe wird erfindungsgemäß mit den Merkmalen des Patentanspruchs 1 gelöst.

Die Ausbildung der Anschlagfläche in Form einer nach innen gezogenen, ringförmigen Rippe am inneren Ende des Ringflansches gemäß Anspruch 1 erlaubt eine großflächige Anlage der Anschlagfläche an der Stirnseite des Befestigungsflansches, an dem die Manschette festgelegt ist. Da die Rippe innenseitig am Ringflansch festgelegt ist, behindert diese das Aufstecken der Manschette auf dem Befestigungsflansch in keiner Weise, so daß sich diese Rippe zur Erzielung der gewünschten Dichtwirkung ausreichend weit nach innen erstrecken kann. Damit sorgt bereits die Anschlagfläche für eine entsprechende Dichtwirkung der Manschette, so daß innerhalb der Manschette vorgesehenes Fett zur Schmierung der Gelenkverbindung nicht austreten kann. Schließlich verhindert die Anschlagfläche ein Eindringen von Schmutz, der die Funktionstüchtigkeit der Gelenkverbindung beeinträchtigen könnte. Außerdem verleiht die nach innen gezogene Rippe auch dem zylindrisch geformten Ringflansch eine Steifigkeit, so daß auch dessen Dichtwirkung in Verbindung mit der Rippe gegenüber dem Befestigungsflansch verbessert wird. Schließlich verleihen die Rippen der nicht genutzten Ringflansche der Manschette eine erhöhte Steifigkeit, so daß Durchmesseränderungen der sich drehenden Manschette auch bei höheren Drehzahlen klein bleiben. Dies verhindert ein Anschlagen oder Aufscheuern der Manschette an stehenden Teilen des Fahrzeugs. Um eine ausreichend hohe Stabilität des Ringflansches zu erzielen, ist der Innendurchmesser der Rippe kleiner oder gleich dem Innendurchmesser des nächst kleineren Ringflansches ausgebildet. Für den Fall, daß die nicht benötigten Ringflansche samt den anschließenden Rippen vor der Montage der Manschette abgetrennt werden, kann der Rippeninnendurchmesser ohne Rücksicht auf den Flanschdurchmesser relativ klein gewählt werden. Der Rippeninnendurchmesser ist in diesem Fall lediglich durch den erforderlichen Bewegungsfreiraum einer Welle der Gelenkverbindung begrenzt. Sollen dagegen die nicht benötigten Ringflansche erst nach der Montage der Manschette abgetrennt werden, so ist es günstiger, den Innendurchmesser der Rippe gleich oder nur geringfügig kleiner als den Innendurchmesser des nächst kleineren Ringflansches zu dimensionieren, um ein ungehindertes Aufstecken der Manschette über den Flansch der Gelenkverbindung sicherzustellen und trotzdem eine ausreichende Dichtwirkung zu erzielen.

Aufgrund der stufenartigen Ausbildung der Ringflansche besitzt die Manschette eine um so größere Länge, je größer der Flanschdurchmesser der Gelenkverbindung ist. Mit zunehmender Manschettenlänge steigen jedoch auch die Anforderungen an die Verformbarkeit der Manschette. Um dieser Anforderung gerecht zu werden, wird gemäß Anspruch 2 vorgeschlagen, die Manschette zwischen den Ringflanschen auszustülpen. Diese ringförmigen Ausstülpungen bewirken eine zusätzliche' elastische Verformbarkeit, die um so wirksamer ist, je mehr Ausstülpungen vorhanden sind und je größer diese gewählt werden. Daher nimmt die elastische Verformbarkeit der Manschette mit zunehmendem Ringflanschdurchmesser zu.

Um die nicht benötigten Ringflansche leicht mit einem Messer von der Manschette abtrennen zu können, ist es gemäß Anspruch 3 vorteilhaft, wenn die Manschette außenseitig geringe Nuten aufweist. In diesen U- oder V-förmigen Nuten läßt sich das Messer korrekt führen, so daß sich ohne weitere Hilfsmittel ein sauberer Schnitt ergibt. Mit Sicherheit wird das Abschneiden von Ringflanschen nur notwendig sein, wenn zur Festlegung der Manschette ein Ringflansch von kleinem Durchmesser erforderlich ist, und ein Ringflansch von größerem Durchmesser am Manschettenende ungenutzt und störend vorhanden ist.

Grundsätzlich könnte die Nut in die Manschette eingeformt sein, so daß sich im Bereich der Nut eine Materialschwächung ergibt. Dies kann sich jedoch nachteilig auf die Einsatzdauer der Manschette auswirken, so daß es gemäß Anspruch 4 günstiger ist, die beispielhafte U- oder V-förmige Nut von einer an der Manschette angeformten Lippe und der Ausstülpung zu begrenzen. Hierdurch ergibt sich eine ausreichende Markierung und sichere Führung des Messers, ohne eine Materialschwächung der Manschette in Kauf nehmen zu müssen. Die vorstehende Lippe am Ende des Ringflansches bietet eine Halte- und Lagesicherung für das festzulegende Schellenband.

Ferner ist es gemäß Anspruch 5 günstig, mindestens eine Ausstülpung des Faltenbalgs im Kantenbereich verstärkt auszubilden. Diese verstärkte Ausstülpung weist somit eine erhöhte Formstabilität auf, ohne die Schwenkbarkeit der Gelenkverbindung zu beeinträchtigen. Damit kann der Innenraum der verstärkten Ausstülpung als Vorratsraum für ein Fett zur Schmierung der Gelenkverbindung genutzt werden.

Schließlich hat sich als vorteilhaft gezeigt, entsprechend Anspruch 6 jeweils die Kuppe der Außen- und/oder Innenfalte abgeflacht auszubilden. Die erhöhte Materialansammlung verbleibt im Knickbereich und gibt somit dem gestulpten Teil an der richtigen Stelle größere Festigkeit und Formstabilität, ohne daß die Elastizität und Biegefreudigkeit in der auf- und absteigenden Wandung der Ausstülpung verloren geht.

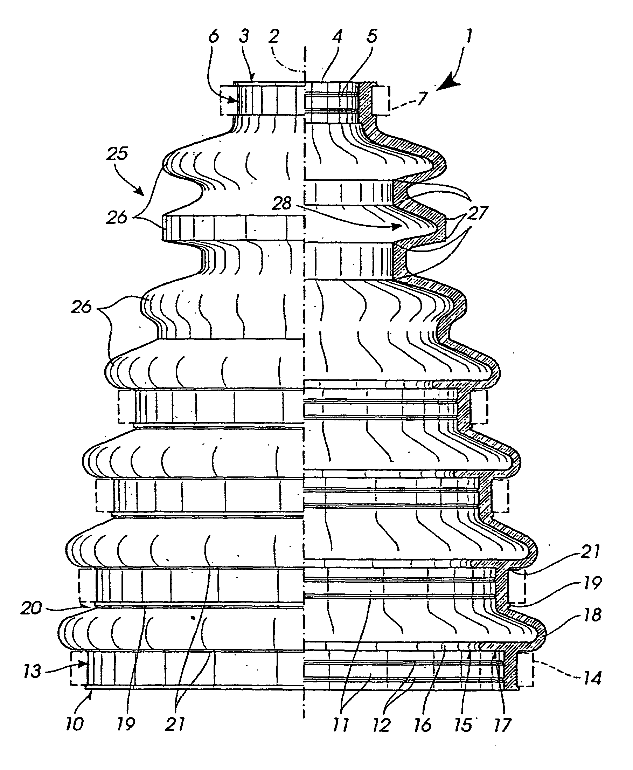

Der Erfindungsgegenstand wird beispielhaft anhand der Zeichnung beschrieben, ohne den Schutzumfang zu beschränken.

Die einzige Figur zeigt eine Manschette 1, deren linke Hälfte in Ansicht und deren rechte Hälfte im Schnitt dargestellt ist. Die Manschette 1 ist ein rotationssymmetrischer Körper mit einer Achse 2. An einem Ende 3 der Manschette 1 ist ein Ringflansch 4 mit zwei innenseitig radial umlaufenden Dichtlippen 5 vorgesehen, die zum dichten Festlegen der Manschette 1 an einer nicht dargestellten Welle der Gelenkverbindung dienen. Die Manschette 1 weist im Bereich ihres Endes 3 eine radial umlaufende Vertiefung 6 zur Festlegung eines strichliert angedeuteten Schellenbandes 7 auf, mit dem die erforderliche Anpreßkraft des Ringflansches 4 an der Welle erzeugt wird.

Im Bereich des Gegenendes 10 der Manschette 1 sind mehrere hintereinandergesetzte Ringflansche 11 vorgesehen, die sich.stufig nach innen in ihrem Durchmesser verjüngen. Diese Ringflansche 11 dienen zur Festlegung der Manschette 1 an einem nicht dargestellten Befestigungsflansch von beispielsweise einem Gehäuse. Aus' diesem ebenfalls nicht dargestellten Gehäuse ragt die mit einer Gelenkverbindung versehene Welle heraus. Um auch gegenüber dem Befestigungsflansch einen ausreichend dichten Abschluß sicherzustellen, sind die Ringflansche 11 innenseitig auch mit radial umlaufenden Dichtlippen 12 versehen. Im Bereich jedes Ringflansches 11 ist an der Manschette 1 außenseitig eine geringe umlaufende Vertiefung 13 vorgesehen, die zur Aufnahme eines strichliert dargestellten Schellenbandes 14 dient.

Am innenseitigen Ende 15 jedes Ringflansches 11 ist eine radial nach innen gezogene, umlaufende Rippe 16 angeformt. Diese Rippe 16 bildet mit ihrer zum Ringflansch 11 zeigenden Fläche 17 einen Anschlag, an dem stirnseitig der Befestigungsflansch bei gutem Sitz der Manschette 1 anliegt. Die Rippe 16 sorgt außerdem für eine Versteifung des Ringflansches 11, so daß dieser formstabil ist, um ausreichend sicher am Befestigungsflansch festlegbar zu sein.

Zwischen jeweils zwei Ringflanschen 11 ist in der Manschette 1 eine Ausstülpung 18 vorgesehen, die eine gewisse Verformbarkeit in Dehnung und Drehung und damit erhöhte Elastizität der Manschette 1 bewirkt. Durch diese Ausstülpungen 18 ist gewährleistet, daß die Verformbarkeit der Manschette 1 um so größer ist, je größer der Durchmesser des Flansches der Gelenkverbindung und damit je größer der Abstand zwischen dem verwendeten Ringflansch 11 und 4 ist.

Um den über den zur Festlegung verwendeten Ringflansch 11 hinausragenden Teil der Manschette 1 leicht abschneiden zu können, bildet die Ausstülpung 18 zusammen mit einer außenseitig an der Manschette 1 angeformten, ringförmigen Lippe 19 eine V-förmige Nut 20. Damit kann ein Messer in der V-förmigen Nut 20 leicht geführt werden, ohne daß die Gefahr besteht, daß der Ringflansch 11 beim Abtrennen des nicht benötigten Teils der Manschette 1 beschädigt wird. Im Bereich des innenseitigen Endes 15 jedes Ringflansches 11 ist außenseitig eine weitere Lippe 21 an der Manschette 1 angeformt, die zusammen mit der Lippe 19 eine Führung für das Schellenband 14 bildet. Die Lippen 19, 21 sorgen dabei für ein korrektes Anliegen des Schellenbandes 14, das zumindest einseitig von der Ausstülpung 18 der Manschette 1 beabstandet ist. Auf diese Weise wird eine Beschädigung der Ausstülpung 18 durch das Schellenband 14 zuverlässig verhindert.

Insbesondere im mittleren Bereich ist die Manschette 1 als Faltenbalg 25 ausgebildet, der von vier Ausstülpungen 26 gebildet ist. Mindestens eine Ausstülpung 26 weist mit ihren Einschnürungen an den jeweiligen Umlenkungen eine verstärkte Wandung mit Kantenausbildung 27 auf, die dem Faltenbalg 25 eine gewisse Formstabilität verleihen. Auf diese Weise wird verhindert, daß sich die Ausstülpung 26 bei der Deformation des Faltenbalges 25 vollständig zusammendrücken läßt. Damit kann der Innenraum 28 der Ausstülpungen 26 als Vorratsraum für Schmierfett eingesetzt werden, der durch die Rippen 16 abgedichtet bleibt.

### Bezugszeichenliste

- 1: Manschette
- 2: Achse
- 3: Ende
- 4: Ringflansch
- 5: Dichtlippe
- 6: Vertiefung
- 7: Schellenband
- 10: Gegenende
- 11: Ringflansch
- 12: Dichtlippe
- 13: Vertiefung
- 14: Schellenband
- 15: innenseitiges Ende des Ringflansches
- 16: Rippe
- 17: Anschlagfläche
- 18: Ausstülpung
- 19: Lippe
- 20: Nut
- 21: Lippe
- 25: Faltenbalg
- 26: Ausstülpung
- 27: verstärkte Falte
- 28: Innenraum der Ausstülpung

## Patentansprüche

1. Manschette zum Abdichten einer Gelenkverbindung, wobei die Manschette (1) als elastisch verformbarer Faltenbalg (25) ausgebildet ist, an dessen beiden Enden (3, 10). axial ausgerichtete Ringflansche (4, 11) vorgesehen sind, die zur Festlegung der Manschette (1) einerseits auf einem zylindrisch ausgebildeten Befestigungsflansch und andererseits auf einer Welle mittels jeweils einem Schellenband (7, 14) dienen, wobei zur Festlegung an unterschiedlich großen Befestigungsflanschen mehrere, im Durchmesser gestufte Ringflansche (11) aneinandergereiht vorgesehen sind, wobei mindestens einem der Ringflansche (11) eine radial nach innen gezogene Rippe (16) zugeordnet ist, **dadurch gekennzeichnet, daß** die Rippe (16) am, in axiabrichtung gesehen, inneren Ende (15) am Ringflansch (11) angeformt ist und dichtend an der Stirnseite des Befestigungsflansches anliegt, wobei der Innendurchmesser der Rippe (16) kleiner oder gleich dem Innendurchmesser des nächst kleineren Ringflansches (11) ist.

2. Manschette nach Anspruch 1, **dadurch gekennzeichnet, daß** die Manschette (1) zwischen den aneinandergereihten Ringflanschen (11) mindestens eine elastisch verformbare, umlaufende Ausstülpung (18) aufweist.

3. Manschette nach Anspruch 1 oder 2, **dadurch gekennzeichnet, daß** die Manschette (1) zwischen zwei gestuften Ringflanschen (11) am äußeren Ende des jüngeren Ringflansches (11) außenseitig eine umlaufende Nut (20) aufweist.

4. Manschette nach Anspruch 3, **dadurch gekennzeichnet, daß** die Nut (20) von der Ausstülpung (18) und einer außenseitig am Ende des Ringflansches (11) angeformten Lippe (19) begrenzt ist.

5. Manschette nach mindestens einem der Ansprüche 1 bis 4; **dadurch gekennzeichnet, daß** der Faltenbalg (25) Ausstülpungen (27) aufweist, von denen mindestens eine ihrer Außen- und/oder Innenfalten (27) im Querschnitt verstärkt ausgebildet ist/sind.

6. Manschette nach Anspruch 5, **dadurch gekennzeichnet, daß** die verstärkte Außen- und/oder Innenfalte (27) eine abgeflachte Wandung im längs zur Achse (2) sich erstrekkenden Bereich aufweist.

## Claims

1. Collar for sealing an articulated joint, the collar (1) being designed as an elastically deformable bellows (25), at both ends (3, 10) of which axially oriented annular flanges (4, 11) are provided, which flanges are used to fix the collar (1) on one side to a cylindrically configured securing flange and on the other side to a shaft, in each case by means of a clip band (7, 14), wherein a plurality of annular flanges (11) of stepped diameters are provided arranged in a row for the purpose of fixing to securing flanges of different sizes, at least one of the annular flanges (11) being assigned a rib (16) which is drawn radially inwards, **characterized in that** the rib (16) is formed integrally on the annular flange (11) at the inner end (15), as seen in the axial direction, and bears in a sealing manner against the end side of the securing flange, the internal diameter of the rib (16) being less than or equal to the internal diameter of the next smallest annular flange (11).

2. Collar according to Claim 1, **characterized in that** the collar (1) has at least one elastically deformable, encircling protuberance (18) between the adjacent annular flanges (11).

3. Collar according to Claim 1 or 2, **characterized in that** the collar (1) on the outer side has an encircling groove (20) between two stepped annular flanges (11), at the outer end of the narrower annular flange (11).

4. Collar according to Claim 3, **characterized in that** the groove (20) is delimited by the protuberance (18) and a lip (19) formed integrally on the outer side of the end of the annular flange (11).

5. Collar according to at least one of Claims 1 to 4, **characterized in that** the bellows (25) has protuberances (27), at least one of the outer and/or inner folds (27) of which is thickened in cross section.

6. Collar according to Claim 5, **characterized in that** the thickened outer and/or inner fold (27) has a flattened wall in the region extending longitudinally with respect to the axis (2).

## Revendications

1. Manchon pour l'étanchéité d'une liaison articulée, le manchon (1) étant réalisé en soufflet déformable de manière élastique, aux deux extrémités (3, 10) duquel sont prévues des brides (4, 11) orientées axialement, qui servent à fixer le manchon (1) d'une part sur une bride de fixation de configuration cylindrique et d'autre part sur un arbre au moyen de colliers de serrage respectifs (7, 14), plusieurs brides annulaires (11) de diamètres échelonnés étant prévues en alignement mutuel aux fins de fixation sur des brides de fixation de tailles différentes, une nervure (16) tirée radialement vers l'intérieur étant associée à au moins l'une des brides annulaires (11), **caractérisé en ce que** la nervure (16) est formée à l'extrémité intérieure (15), vu dans la direction axiale, sur la bride annulaire (11) et s'appuie de manière étanche sur la face frontale de la bride de fixation, le diamètre intérieur de la nervure (16) étant plus petit ou égal au diamètre intérieur de la bride annulaire (11) immédiatement plus petite.

2. Manchon selon la revendication 1, **caractérisé en ce que** le manchon (1) présente entre les brides annulaires (11) mutuellement alignées au moins un renflement (18) périphérique déformable de manière élastique.

3. Manchon selon la revendication 1 ou 2, **caractérisé en ce que** le manchon (1) présente entre deux brides annulaires (11) échelonnées, à l'extrémité extérieure de la bride annulaire (11) la plus étroite, une rainure (20) périphérique du côté extérieur.

4. Manchon selon la revendication 3, **caractérisé en ce que** la rainure (20) est limitée par le renflement (18) et une lèvre (19) formée du côté extérieur à l'extrémité de la bride annulaire (11).

5. Manchon selon au moins l'une des revendications 1 à 4, **caractérisé en ce que** le soufflet (25) présente des renflements (27), l'un au moins des plis extérieur et/ou intérieur desquels a une configuration renforcée en section transversale.

6. Manchon selon la revendication 5, **caractérisé en ce que** le pli extérieur et/ou intérieur (27) renforcé présente une paroi aplatie dans la zone s'étendant suivant l'axe (2).
